# EUROPÄISCHE PATENTANMELDUNG

(11) **EP 1 199 144 A1**
(43) Veröffentlichungstag der Anmeldung: **24.04.2002**
(21) Anmeldenummer: 01250364.5
(22) Anmeldetag: 17.10.2001
(51) Int. Cl.: B29B 17/00, B29B 17/02, B02C 19/18

(54) **Anlage zur Aufbereitung von Altgummi**

(30) Priorität: 17.10.2000 DE 10053013
(71) Anmelder: Recom Patent & License GmbH, 10719 Berlin (DE)
(72) Erfinder: Detampel, Hans, 12161 Berlin (DE)
(74) Vertreter: Scholz, Hartmut, Dipl.-Ing. Patentanwalt

(57) **Zusammenfassung**

Anlage zur Aufbereitung von Altgummi und Altgummiprodukten durch kryogene Zerkleinerung, mit Kühltunneln zur Unterkühlung des zu zerkleinernden Mahlgutes, Fremdstoffabscheidern und Mahleinrichtungen für tiefgekühltes Mahlgut. Dazu ist eine mehrstufige Vorzerkleinerung mittels Zerkleinerern (17, 17a) vorgesehen. Das vorzerkleinerte Mahlgut wird durch in mehrere Kühlzonen unterteilte Tiefkühlanlage geleitet, in denen ein flüssiges Tiefkühlmittel auf das Mahlgut aufsprühbar ist. Der Tiefkühlanlage ist ein Ausgleichsystem nachgeordnet. Das tiefgekühlte Mahlgut wird in sich anschließenden mehrstufigen Feinzerkleinerern stufenweise fein zerkleinert.

## Beschreibung

Die Erfindung betrifft eine Anlage zur Aufbereitung von Altgummi und Altgummiprodukten durch mehrfache kryogene Zerkleinerung, mit Tiefkühleinrichtungen zur Unterkühlung des zu zerkleinernden Gutes, mit Fremdstoffabscheidern und Klassiereinrichtungen.

Altreifen und Abfallprodukte aus technischen Gummiartikeln stellen ein umfangreiches Rohstoffpotential dar. Gleichzeitig ergeben sich jedoch aus der stetig steigenden Anfallmenge erhebliche Umweltbelastungen. Unter Beachtung der Prinzipien der Kreislaufwirtschaft sowie angesichts der Anstrengungen zur weltweiten Verringerung der CO₂-Emission kommt dem Recycling von Altreifen und Abfallprodukten aus technischen Gummiartikeln eine steigende Bedeutung zu.

So ist beispielsweise aus der DE 39 15 984 C1 eine Anlage bekannt, mit der Altgummi entsorgt, nämlich recycelt werden kann. Problematisch ist, daß Gummi als ausvulkanisierter Kautschuk durch Erwärmen nicht plastifiziert, sondern verkohlt wird. Die vorgenannte Anlage arbeitet mit einem zweigeteilten, hintereinander geschalteten Kühltunnel, welcher jeweils mit einem das Material von einem Einwurfende bis zu einem Auswurfende bewegenden Förderer versehen ist, wobei das Auswurfende des ersten über dem Einwurfende des zweiten Förderers liegt.

Eine andere Zerkleinerungsanlage ist in der DE 1 004 460 B1 beschrieben. Diese Anlage arbeitet allerdings mit einer mehr oder weniger zufällig erfolgenden Vorkühlung. Eine zielgerichtete Abkühlung ist mit dieser Anlage nicht möglich. Nachteilig ist insbesondere der hohe Verbrauch und die niedrige Effizienz des Kühlmitteleinsatzes.

Altgummi fällt auch in großer Menge in Form von nicht mehr runderneuerbaren Karkassen von Autoreifen an. Derartige Altreifen stellen durch ihren hohen Metall- oder Textilanteil ein erhebliches Entsorgungsproblem dar. Bei der bisher üblichen Entsorgung durch Verbrennen erzeugen sie eine große Menge an schadstoffhaltigen Abgasen, für deren Entsorgung wiederum aufwendige Filteranlagen erforderlich sind. Ein weiteres Problem sind die textilen oder metallischen Verstärkungseinlagen, die in den Karkassen eingelagert sind.

Altgummi soll nach dem bekannten Kryogenverfahren durch Granulieren in einen wiederverwendbaren Sekundärrohstoff umgewandelt werden, um ihn erneut einem Produktionsprozeß zuführen zu können. Der elastische Altgummi wird dazu mit Hilfe eines Kältemittels, vorzugsweise flüssigen Stickstoffs, auf sehr tiefe Temperaturen heruntergekühlt. Die Temperatur soll bei ca. -140°C liegen, damit der Altgummi versprödet und dann gemahlen werden kann.

Problematisch bei dem bekannten Verfahren ist es, eine bis in die Kernzone der zu zerkleinernden Altreifen reichende Durchkühlung und Versprödung zu erzielen. Dazu ist eine ausreichend lange Beaufschlagung der Altreifen mit dem Kältemittel erforderlich. Gleichzeitig muß ein einwandfreier Transport der sich langsam abkühlenden Reifen gewährleistet sein, um eine Wiedererwärmung durch Reibung auszuschließen.

Ein weiteres Problem sind die textilen oder metallischen Verstärkungseinlagen, die in den Karkassen eingelagert sind. Auch diese Bestandteile sind Rohstoffe, die in möglichst reiner Form rückgewonnen werden sollen.

Recyclingverfahren wie das in der WO 9908849 beschriebene Pyrolyseverfahren können diesen Anspruch nicht erfüllen, da alle organischen Bestandteile des Altgummis in ihre petrochemischen Bestandteile zerlegt werden, wobei ein erheblicher Teil der Pyrolyseprodukte zur Erzeugung der erforderlichen Prozeßenergie verwandt werden muß.

Verschiedene Anlagen wurden zum Zwecke der Gewinnung von Gummigranulat und Gummimehl entwickelt. Sie sind dadurch gekennzeichnet, daß die Altreifen mit bekannter Technik vorzerkleinert und anschließend tiefgekühlt und zerkleinert werden.

Aus der DE 40 33 599C2 ist ferner eine Anlage bekannt, bei der Kühltunnel in zwei parallelen Prozeßlinien angeordnet sind. Die Kühltunnel sind mit Umpumpvorrichtungen versehen, mit denen das Kühlmittel aus dem einen in den anderen Teil zum Temperaturausgleich umgepumpt werden kann. In den Kühltunneln sind Umwälzeinrichtungen für das verdampfende Kühlmittel angeordnet. Das Gut wird dadurch ausreichend lange und intensiv mit dem Kältemittel beaufschlagt.

Die oben beschriebenen Anlagen arbeiten mit einstufiger Kühlung/Zerkleinerung des Altgummimaterials. Es hat sich aber gezeigt, daß die in diesen kryogenen Zerkleinerungsanlagen herstellbaren Gummigranulate und Gummimehle für eine technische Wiederaufbereitung und Weiterverarbeitung sehr ungünstige Eigenschaften aufweisen. Sie sind noch mit einem hohen Anteil an Begleitstoffon wie Textil und/oder Stahl behaftet, sind von unterschiedlicher Konsistenz und besitzen ein grobes Kornspektrum. Derartige Altgummiprodukte sind für eine großtechnische Wiederverwendung bei der Reifenherstellung ungeeignet und führen zu erheblichen technischen Verarbeitungsproblemen. Außerdem werden die herausgetrennten Verstärkungsmaterialien wie Stahl oder Textil nicht sauber voneinander getrennt und weisen einen hohen Anteil an Restgummi auf.

Aufgabe der vorliegenden Erfindung ist es, eine Anlage zu schaffen, mit der Altgummi und Altgummiprodukte möglichst vollständig recycelt und nach dem an sich bekannten Tiefkaltverfahren in einen Sekundärrohstoff umgewandelt werden kann, der erneut einem Produktionsprozeß zugeführt werden kann.

Gelöst wird diese Aufgabe durch die Maßnahmen des Anspruchs 1, insbesondere durch eine mehrstufige Vorzerkleinerung, eine nachgeordnete, mehrstufige Tiefkühlanlage, bestehend aus einem Vorkühltunnelsystem, in das zusätzlich kaltes Kühlmittelabgas einleitbar ist, einem Hauptkühltunnelsystem, in dem ein flüssiges Tiefkühlmittel auf das vorzerkleinerte Gut aufsprühbar ist und einem Ausgleichssystem, ferner durch dem Tiefkühlsystem sich anschließende mehrstufige Zerkleinerungseinrichtungen für tiefgekühltes Mahlgut, Klassier- und Trennprozesse für das Aufbereiten des Mahlgutes, eine weitere, nachfolgende Tiefkühlanlage, bestehend aus einem Vorkühltunnelsystem, in das kaltes Kühlmittelabgas einleitbar ist, einem Hauptkühltunnelsystem, in dem ein flüssiges Tiefkühlmittel auf das vorzerkleinerte Gut aufsprühbar ist sowie ein Ausgleichssystem, sowie durch dem Tiefkühlsystem nachgeordnete eine oder mehrere Feinzerkleinerungseinrichtungen, für tiefkaltes Gut, und sich anschließende Klassier- und Trenneinrichtungen für die Aufbereitung des erzeugten Mehles.

Durch diese Maßnahmen können Gummigranulate und Gummimehle sehr hoher Reinheit hergestellt werden. Derartige Gummigranulate und Gummimehle können in Neureifen und andere Gummiprodukte problemlos eingearbeitet werden, ohne deren Festigkeit und Belastbarkeit oder sonstige technische Eigenschaften negativ zu beeinflussen. Der Einsatz von neuen Rohstoffen kann dadurch reduziert, Ressourcen geschont und die Probleme bei der Beseitigung von Altreifen wirksam gelöst werden.

Der elastische Altgummi wird dazu mit Hilfe eines Kältemittels, vorzugsweise flüssigem Stickstoff, auf sehr tiefe Temperaturen heruntergekühlt. Die Verarbeitungstemperatur muß unter ca. -70°C bis -90°C liegen, damit der Altgummi versprödet und dann so zu Granulat zerkleinert werden kann, daß sich das Gummimaterial gleichzeitig von den Verstärkungsmaterialien Stahldraht und Textileinlagen löst. Problematisch ist es, eine bis in die Kernzone der zu zerkleinernden Altreifen reichende Durchkühlung und Versprödung zu erzielen. Dazu ist eine ausreichend lange Beaufschlagung der Altreifen mit dem Kältemittel erforderlich.

Der Gesamtprozeß ist in zwei Hauptprozesse, in eine kryogene Granulaterzeugung und eine kryogene Gummimehlherstellung untergliedert, gekoppelt mit der Anwendung speziell abgestimmter Zerkleinerungs-, Klassier- und Sortiertechnik. Die Reifen werden in mehreren Stufen vorzerkleinert und durch in mehrere Kühlzonen unterteilte Tiefkühltunnel geleitet, in denen ein flüssiges Tiefkühlmittel auf das Gut aufgesprüht wird. Nach dem Kühlprozeß wird das tiefkalte Gut in sich anschließenden, mehrstufigen, mit Metall- und Textilaushaltungen versehenen Prozessen zerkleinert und gereinigt. Das so erzeugte, sehr reine Granulat wird erneut einem Kühlprozeß zugeführt, in speziellen Mühlen zu feinem Mehl verarbeitet und anschließend von Fremdstoffen gereinigt.

Die gesamte Granulatherstellung ist so aufgebaut, daß Wartungs- und Reparaturarbeiten schnell und problemlos vorgenommen werden können. Zu diesem Zweck können die einzelnen Zerkleinerer und die Trenneinrichtungen mit wenigen Handgriffen mittels einer fest installierten Verfahreinrichtung aus der Arbeitsstellung in eine Servicestellung umgesetzt werden. Über den Kühltunneln installierte, nicht dargestellte Hebezeuge erleichtern in der Servicestellung eventuell erforderliche Reparaturen.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- **Figur 1**: die schematische Darstellung einer Reifenzerkleinerungsanlage mit einer mehrstufigen Reifenvorzerkleinerung, nachgeordneten Abscheidern, Grobanteilrückführung, Metall/Textilabtrennung und Dosiereinrichtungen;
- **Figur 2**: die schematische Darstellung einer Tiefkühlanlage, mit zwei parallel verlaufenden Kühltunneln, mit verschiedenen Temperaturzonen, Kühlmittelaufsprühung und nachgeordnetem Ausgleichstunnel;
- **Figur 3**: die schematische Darstellung einer den Kühltunneln nachgeordneten mehrstufigen Zerkleinerungseinrichtung, mit Abscheidern und Trenneinrichtungen;
- **Figur 4**: die schematische Darstellung einer Granulaterwärmung;
- **Figur 5**: die schematische Darstellung einer Klassiereinrichtungen und Anlagen für die Zerkleinerung;
- **Figur 6**: die schematische Darstellung einer mehrstufigen Granulatklassierung;
- **Figur 7**: die schematische Darstellung einer Granulatnachreinigung, Granulatverpackung und Granulatverladung;
- **Figur 8**: die schematische Darstellung einer Granulat-Vorkühlung, Tiefkühlung und Gummimehlherstellung, mit Kaltgasrückführung;
- **Figur 9**: die schematische Darstellung einer Gummimehlerwärmung;
- **Figur 10**: die schematische Darstellung einer Anlagen für die Mehlklassierung.

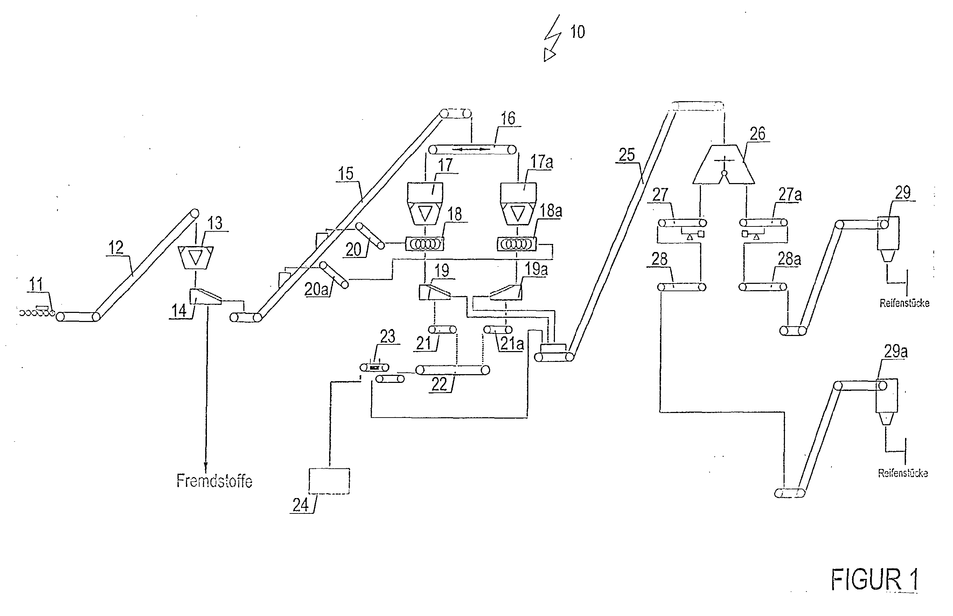

Die in der Figur 1 dargestellte Reifenzerkleinerungsanlage 10 besteht im wesentlichen aus einer Reifenzuführung 11, die wiederum mit aus einer Dosierung 11a und einer Zuführeinrichtung 12 besteht. Der Reifenzuführung 11 ist ein erster Zerkleinerer 13 nachgeordnet, in dem die zugeführten Altreifen auf eine bestimmte Größe vorzerkleinert werden. Dem Zerkleinerer 13 ist ein Abscheider 14 nachgeordnet. In dem Abscheider 14 werden mineralische Bestandteile und Wasser abgetrennt.

Mittels eines Förderers 15 wird das grobzerkleinerte Gut über einen Verteiler 16 zweiten Zerkleineren 17 und 17a zugeführt. Der Verteiler 16 ist reversierend gesteuert, so daß die nachfolgenden parallel angeordneten Zerkleinerer 17 und 17a gleichmäßig beschickt werden

Optional kann auf den Förderer 15 auch vorzerkleinertes Gut aus Altreifen oder Kunststoff-Metall-Textil-Verbund-Werkstoffen aufgegeben werden.

An die Zerkleinerer 17 und 17a schließen sich Klassiereinrichtungen 18 und 18a an. Grobanteile werden über Grobteilrückführungen 20 und 20a in den Förderer 15 zurückgeführt, wo sie noch einmal in die Zerkleinerer 17 oder 17a gelangen.

Die Reifenstücke gelangen von den Klassiereinrichtungen 18 und 18a auf Abscheider 19 und 19a, die freigelegte Stahl- oder Textilarmierungsteile und Feingut abtrennen. Das nicht abgetrennte Gut wird über ein Fördersystem 25 einer Verteileinrichtung 26 zugeführt. Die freigelegten Armierungsteile und das Feingut werden durch Zusammenführeinrichtungen 21 zusammengeführt und über eine Auflockerungseinrichtung 22 zu einem Stahlabscheider 23 transportiert.

Vom Stahlabscheider 23 werden bis dahin angefallene, freiliegende Armierungsteile, insbesondere Metallteile aus dem Feingut abgetrennt. Diese Metallteile, beispielsweise Wulstdrahtstücke, können bei Lkw-Reifen eine Länge von 5 bis 10cm und einen Querschnitt von 2 bis 6mm² aufweisen. Dem Stahlabscheider 23 ist einer Konfektionierung 24, beispielsweise eine nicht näher dargestellte Containerablage, zugeordnet, mit der die abgetrennten Stahlanteile einer weiteren Verwendung zugeführt werden können.

Die im Stahlabscheider 23 gereinigten Gummiteile werden mit dem von den Abscheidern 19 und 19a kommenden Hauptgutstrom vereinigt. Der Hauptgutstrom wird mit dem Fördersystem 25 zur gleichmäßigen Verteilung von Verteileinrichtungen 26 bis 29a auf zwei parallele Linien transportiert.

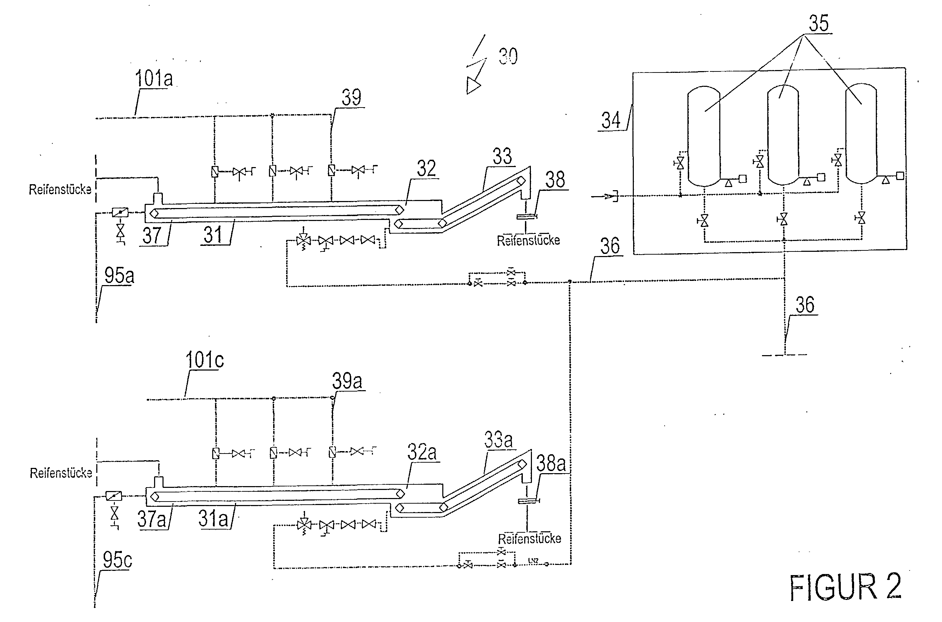

Mittels der Verteileinrichtung 26 und dieser zugeordneten Dosiereinrichtungen 27 und 27a erfolgt eine gleichmäßige Aufteilung der zu mahlenden Reifenstücke auf parallel angeordnete Beschickungsförderer 28 und 28a. Von den Beschickungsförderern 28 und 28a gelangen die Reifenstücke über ein Zuführsystem 29 und 29a in eine Tiefkühlanlage 30, wie sie in der Figur 2 in Detail dargestellt ist.

Um eine hohe Verfügbarkeit der Anlage zu erreichen, ist die in Figur 2 dargestellte Tiefkühlanlage 30 aus parallel angeordneten Aggregaten und Einrichtungen aufgebaut. Die Gummiteile, beispielsweise Reifenstükke, werden hier unter ihre Versprödungstemperatur abgekühlt. Diese Versprödungstemperatur liegt für Gummi im Bereich von etwa -80°C bis -120°C.

Durch die Tiefkühlanlage 30 muß sichergestellt werden, daß der Produktstrom diese Temperatur während der nachfolgenden Zerkleinerungsprozesse, bei denen Energie zugeführt wird, nicht unterschreitet. Die Erfahrungen ergeben, daß eine Produkttemperatur von ca. minus 110°C bis minus 150°C, entsprechend 163 bis 123 Kelvin, für die Granulatherstellung und Mehlerzeugung erreicht werden sollten.

Die Tiefkühlanlage 30 dient zum Kühlen der Reifenstükke mit einem Kältemittel. Zur Bevorratung des Kältemittels ist der Tiefkühlanlage 30 eine Kühlmittelversorgung 34 zugeordnet, in der vorzugsweise flüssiger Stickstoff in Kühlmitteltanks 35 bevorratet ist. Das Kühlmittel wird aus den Kühlmitteltanks 35 über spezielle Kühlmittelzuleitungen 36 Hauptkühltunnelsystemen 32 und 32a zugeführt.

Die Tiefkühlanlage 30 selbst besteht aus zwei im wesentlichen waagerecht liegend angeordneten Kühltunneln, die jeweils einem Vorkühltunnelsystem 31 und 31a und einem Hauptkühltunnelsystem 32 und 32a zugeordnet sind. Zwischen beiden Systemen ist ein Ausgleichssystem 33 und 33a zum Ausgleich der Temperaturen vorgesehen.

Das zu kühlende Gut wird durch die Zuführsysteme 29 und 29a auf speziell Förderer 37 und 37a der Vorkühltunnelsysteme 31/31a aufgegeben und von diesen durch die einzelnen Kühlbereiche transportiert. Das Zuführsystem 29/29a ist so konstruiert, daß keine Kühlmittelabgase und damit Kälteenergie unkontrolliert in die Umgebung abfließen können.

Die Förderer 37/37a sind mit drehzahlveränderlichem Antrieb versehen, wodurch die Verweilzeit des Gutes in den Kühltunneln stufenlos regelbar und optimal eingestellt werden kann. Die thermisch bedingte Längenänderung der Förderer 37/37a wird durch eine Federlagerung ausgeglichen.

In den Vorkühltunnelsystemen 31/31a sind mehrere, vorzugsweise zwei bis fünf Kaltgaszuführungen 39 und 39a integriert, die die tiefkalten Kühlmittelabgase aus einer nachgeordneten, noch zu beschreibenden Granulatkühlung 93 einleiten. Mittels einer nicht näher beschriebenen Temperaturregelung werden die tiefkalten Abgase, vorzugsweise Stickstoffgase, in die entsprechenden Vorkühlzonen geleitet.

In den Hauptkühltunnelsystemen 32/32a wird das Kühlmittel auf die vorzerkleinerten Reifenstücke aufgesprüht, wo es verdampft. Dadurch wird eine sehr hohe Effizienz in der Kälteausnutzung des flüssigen Stickstoffs erreicht, und das Gut wird stufenweise heruntergekühlt.

Die intensive Kühlung der Reifenstücke wird durch Zirkulationsventilatoren und Transportventilatoren unterstützt. Aufgrund der hohen Gasströmungen im Tunnelbereich, die eine turbulente Strömung Re > 3000 aufweist, kann das Wärmeübertragungsverhalten entscheidend verbessert werden.

Das entstehende tiefkalte Stickstoffgas wird gegen den Produktstrom der Hauptkühltunnelsysteme 32/32a in die Vorkühltunnlesysteme 31/31a transportiert. Das sich erwärmende Stickstoffgas gelangt zu einem Gasaustritt an dem Zuführsystem 29/29a und wird mittels der Kaltgasrohrleitungen 95a und 95c zur Mehlerzeugung in die Granulatkühlung 93 gefördert.

Durch das gezielte Einsprühen des Kältemittels und den gesteuerten Gastransport kann eine Schrägstellung der Vor- und Hauptkühltunnelsysteme 31/31a und 32/32a unterbleiben.

Es ist kein Stickstoffbad mehr vorhanden und ein Herabsinken der Kälte ist nicht mehr erforderlich. Der Raumbedarf für die Kühltunnelhallen kann dadurch kostengünstig verringert werden.

An die Hauptkühltunnelsysteme 32/32a schließen sich relativ kurze, schräg gestellte Temperaturausgleichssysteme 33/33a an. Diese Ausgleichsbereiche dienen zum Ausgleichen der Temperatur in den Reifenstücken.

Die Tiefkühlanlage 30 ist in Modulbauweise konstruiert und besteht vollständig aus korrosionsbständigen Materialien, vorzugsweise Edelstahl. Die hochwertige Isolierung ist so ausgeführt, daß eine Taupunktunterschreitung vermieden wird. Die Module sind ca. 3m bis 4m lang und können zu Kühlsystemen beliebiger Länge kombiniert werden. Die Tunnel der Vorkühltunnelsysteme 31/31a und die Tunnel der Hauptkühltunnelsysteme 32/32a sind so ausgebildet, daß sie bei ggf. erforderlichen Wartungs- und Reparaturarbeiten für das Reparaturpersonal leicht zugänglich sind. Sie verfügen dazu über feststehende, nicht näher dargestellte Bodenteile, von denen die oberen Tunnelteile mittels hydraulischer Hubzylinder für die anfallenden Inspektions- und Reinigungszwecke vertikal angehoben werden können.

Seitlich sind Edelstahlfüße durch das Bodenteil an die seitlichen Gerüststreben angeschraubt. Sie sind verstellbar und können somit Unebenheiten der Stellfläche ausgleichen. Die - nicht näher dargestellten - hydraulischen Hubzylinder sind mit speziellen Hubfüßen verbunden, die an die seitlichen Gerüststreben innerhalb des Bodenteils angeschraubt sind.

Eine nicht dargestellte elektronische Steuerung steuert und regelt das Einsprühen des Kühlmittels, die Geschwindigkeit des Spezialfördersystems 37/37a und die Gasströmung innerhalb des Vorkühltunnelsystems 31/31a, Hauptkühltunnelsystems 32/32a und Ausgleichsystems 33/33a optimal entsprechend der Produkteingangs- und Umgebungstemperatur. Je nach Anforderung können unterschiedliche Temperaturverläufe in den Vor-, Haupt-, und Ausgleichsystemen 31-33a realisiert worden.

Die Kühltunnel sind dazu mit allen Instrumenten, Armaturen, Meßgeräten, Schaltern und Kontrollampen ausgestattet. Diese sind bedienerfreundlich in einem Schaltschrank eingeordnet.

Wenn der Produktfluß unterbrochen ist, reduziert die Steuerung den Zufluß des Kühlmittels unter Aufrechterhaltung der Betriebstemperatur im Hauptkühltunnelsystem 32 bzw. 32a. Bei längeren Stillstandszeiten hält die Steuerung die Temperatur auf einem bestimmten Niveau, um die Temperaturdifferenz beim Neustart auszugleichen.

Wenn die Produktion dann wieder aufgenommen wird, hat bereits das erste, das Ausgleichsystem 33 bzw. 33a verlassende Produkt die gewünschte Temperatur.

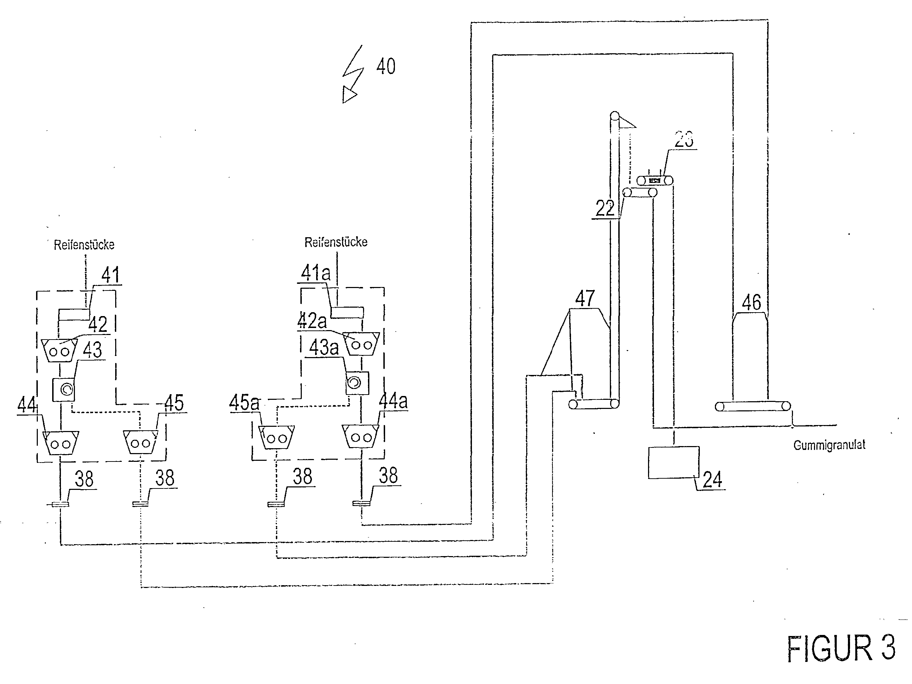

An die Tiefkühlanlage 30 schließt sich, die in der Figur 3 dargestellte Granulatherstellung 40 an. Das tiefkalte, sehr spröde Gut wird über die Zuführeinrichtung 41 und 41a gleichmäßig der Granulatherstellung zugeführt. Die Granulatherstellung 40 erfolgt in 2 Stufen. In der 1. Stufe erfolgt durch spezielle Walzenzerkleinerer 42 und 42a eine Grobzerkleinerung, wobei die einzelnen Reifenbestandteile wie Gummi, Textil und Stahl weitestgehend voneinander getrennt werden.

Die nachgeordneten Abscheider 43 bzw. 43a trennen Stahl und Gummi-Stahl-Verbindungen vom Produktstrom ab und führen diese jeweils einer weiteren kryogen arbeitenden Trenneinrichtung 45 bzw. 45a zu, die verbliebene Stahl-Gummiverbindungen auftrennt und den Gummianteil gleichzeitig zerkleinert. Das erzeugte Gummi-Textil/Stahl-Gemisch wird über ein Fördersystem 47 einer Auflockerungseinrichtung 22 zugeführt. Durch den Abscheider 23 werden die Stahlteile aussortiert und anschließend zur Sammelstelle bzw. Konfektioniereinrichtung transportiert. Das stahlfreie Gummi-Textil-Gemisch wird zum Hauptproduktstrom im Fördersystem 46 zurückgeführt.

Der die Zerkleinerer 42 bzw. 42a verlassende Hauptproduktstrom wird als Gummi-Textil-Gemisch dem zweiten Zerkleinerer 44 bzw. 44a zugeführt. Die Zerkleinerer 44 und 44a trennen durch ihre spezielle Gestaltung Gummi und Textil weitestgehend voneinander. Während der Textilanteil in seiner Struktur erhalten bleibt, wird der Gummianteil zu einem Granulat mit relativ gleichmäßiger Kornstruktur von 1 bis 20 mm, vorzugsweise 1 bis 8 mm zerkleinert.

Das Fördersystem 46 transportiert das Gummi-Textil-Gemisch, dem auch das im Abscheider 23 vom Stahlanteil getrennte Gummi-Textil-Gemisch zugeführt wird, zur Trocknung 49.

Die Zerkleinerer 42, 42a, 44 und 44a und die kryogene Trenneinrichtung 45 und 45a sind Spezialmaschinen, die durch ihre Konstruktion und die bei ihrer Fertigung verwendeten Materialien für die besonderen Beanspruchungen im Tiefsttemperaturbetrieb ausgelegt sind.

Die Zerkleinerer 42, 42a, 44 und 44a und die kryogene Trenneinrichtung 45 und 45a haben drehzahlgesteuerte Antriebe, wodurch es möglich ist, den Zerkleinerungsprozeß feinfühlig der Art der zu verarbeitenden Altreifen anzupassen.

Die Zerkleinerer 42, 42a, 44, 44a und Trenneinrichtungen sind temperatur- und schallisoliert. Das gesamte System ist gekapselt und arbeitet staubfrei.

Die Fördersysteme 46 und 47 sind mit Absperrvorrichtungen 38, 38a ausgerüstet, die verhindern, daß Kaltgas aus der geschlossenen Anlage entweichen kann, wenn einzelne Maschinen in die Servicestellung verfahren wurden.

Die Fördersysteme 46 und 47 sind thermisch vollständig isoliert und so gestaltet, daß nur sehr geringe Kaltgasmengen in nachfolgende Prozesse gelangen.

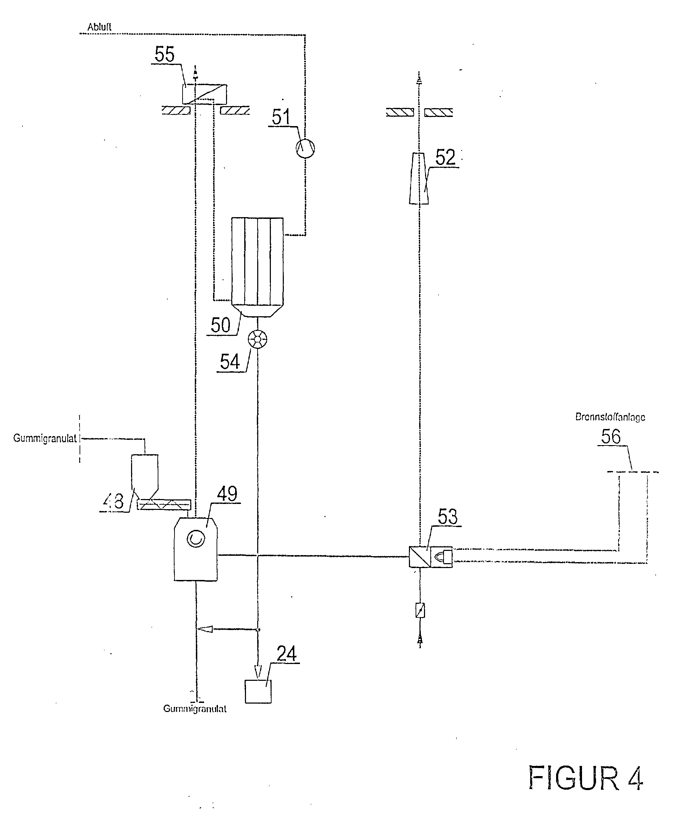

Das bei der Granulatherstellung 40 erzeugte tiefkalte Gut nimmt bei Kontakt mit der Umgebungsluft sofort eine große Menge Feuchtigkeit auf, da an der Oberfläche der Granulate eine Taupunktunterschreitung erfolgt und sich die in der Umgebungsluft enthaltene Feuchtigkeit niederschlägt. Um diesen Feuchtigkeitsniederschlag zu vermeiden oder rückgängig zu machen, wird das Granulat über eine Zuführeinrichtung 48 in eine Erwärmungs- und Trocknungseinrichtung 49, wie sie in der Figur 4 dargestellt ist, transportiert.

Als Erwärmungs- und Trocknungseinrichtung 49 kommt vorzugsweise ein Trommeltrockner zum Einsatz, da diese Ausführung einen kontinuierlichen Prozeß mit hohem Durchsatz ermöglicht. Einbauten erhöhen die Wirksamkeit des Wärmeaustausches zwischen der Trocknungsluft und dem Gut in Kombination mit der Drehbewegung der Trommel.

Die Lufterwärmung erfolgt indirekt mittels eines modulierend arbeitenden Erhitzers 53, um eine schonende und sichere Erwärmung des Gutes unter Berücksichtigung der Maßnahmen des Brand- und Explosionsschutzes im Prozeß zu realisieren.

Die Brennerabgase werden über eine Abgasführung 52 an die Umgebungsluft abgegeben. Die Abluft aus dem Erwärmungsprozeß wird über ein Rohrleitungssystem mit Sicherheitseinrichtung 55 in einen Staubabscheider 50 geleitet und gereinigt.

Dem Staubabscheider kann ein Gebläse 51 nachgeordnet sein, um einen optimalen Luftstrom zu gewährleisten. Der Staubabscheider 50 besitzt alle erforderlichen Sicherheitseinrichtungen und ist so ausgeführt, daß er den Anforderungen des Brand- und Explosionsschutzes entspricht.

Der abgeschiedene Staub wird über eine Austragseinrichtung 54 in eine Konfektionierung 24 ausgetragen oder in den Hauptproduktstrom zurückgeführt. Der Erwärmungs- und Trocknungseinrichtung 49 ist eine Brennstoffversorgung 56, vorzugsweise mit Öl oder Gas, zugeordnet.

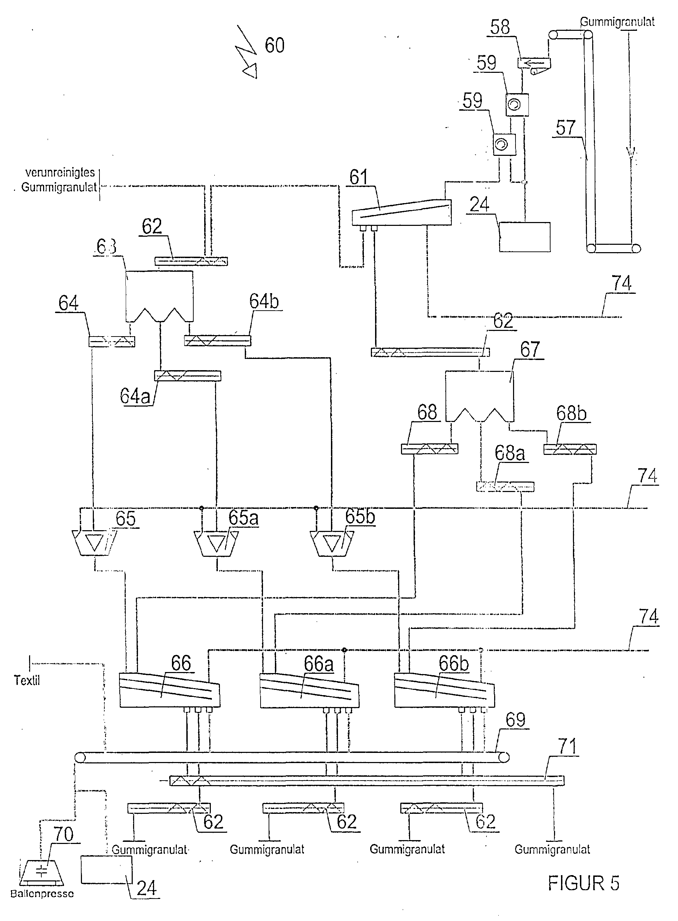

Nach dem Verlassen der Erwärmungs- und Trocknungseinrichtung 49 wird das Granulat über eine Fördereinrichtung 57 und eine Zuführeinrichtung 58 verschiedenen Vorreinigungssystemen zugeführt, wie sie in der Figur 5 dargestellt sind.

Letzte Stahlreste werden durch mehrere hintereinander angeordnete Abscheider 59 vollständig abgetrennt. Das gereinigte Granulat wird dann einer Vorklassieranlage 60 zugeführt.

In der ersten Vorklassieranlage 60 wird das Gut in verschiedene Gutströme sortiert und der weiteren Aufbereitung zugeführt. In der zweiten Vorklassiereinrichtung 61 werden Übergrößen, Textilbestandteile und Gummi-Textil-Verbindungen abgetrennt und über Förderer 62 einem Zwischenspeicher 63 zugeführt.

Über Dosiereinrichtungen 64, 64a, 64b wird das zwischengespeicherte Gut gleichmäßig in die Nachaufbereitungseinrichtungen 65, 65a und 65b transportiert. In den parallel angeordneten Nachaufbereitungseinrichtungen 65, 65a und 65b werden die Granulatübergrößen zerkleinert und die Textilbestandteile in einen abtrennbaren Zustand versetzt. Das so aufbereitete Gut wird dem nachfolgenden Trennprozeß zugeführt.

Das bei der Vorklassierung entstehende Granulat wird über Förderer 62 in einen Zwischenspeicher 67 transportiert und über die Zuführsysteme 68, 68a und 68b gemeinsam mit dem nachaufbereiteten Gut den parallel angeordneten Trenneinrichtungen 66, 66a und 66b zugeführt.

Die im Gut enthaltenen Textilbestandteile werden durch die Trenneinrichtungen 66, 66a und 66b weiter aufbereitet, abgetrennt und gereinigt. Das textile Material wird dann über Textilfördereinrichtungen 69 der nachfolgenden Textilkonfektionierung 70, vorzugsweise mit Ballenpressen, zugeführt.

In den oben beschriebenen Trenneinrichtungen 66, 66a und 66b erfolgt gleichzeitig eine Unterkornabscheidung. Dieses Unterkorn wird mit der Sammel- und Fördereinrichtung 71 einer Nachreinigung in noch zu beschreibenden Mehlaufbereitungssystemen zugeführt.

Die Trenneinrichtungen 66, 66a und 66b sind staubdicht gekapselt und über Absaugstutzen an eine zentrale Staubabsaugeinrichtung oder Staubaspiration 74 angeschlossen. Spezielle Absaugvorrichtungen in der Maschine und eine integrierte Vorsichtung des Granulates gewährleisten eine hohe Staubfreiheit.

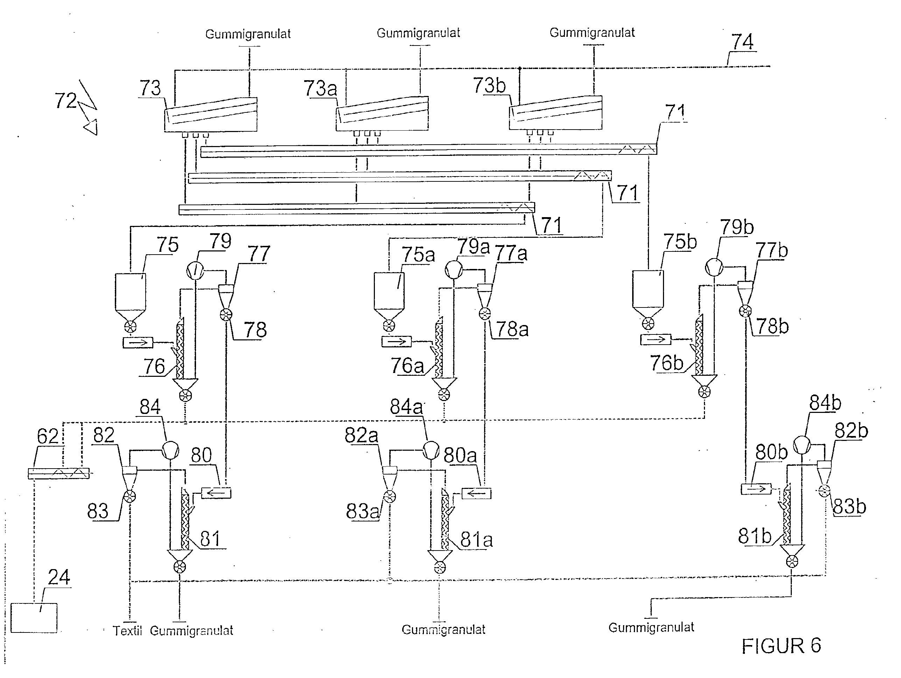

Das so vorgereinigte Granulat wird über Förderer 62 dem nachfolgenden Klassier- und Reinigungssystem 72, das in Figur 6 dargestellt ist, zugeführt. Die Klassierung des Granulates erfolgt in vorzugsweise drei parallel angeordneten Klassiereinrichtungen 73, 73a, und 73b.

In den Klassiereinrichtungen 73, 73a, 73b wird das erzeugte Granulat in vorzugsweise 3 verschiedene Kornfraktionen, d. h. in Granulatpartikel mit unterschiedlichen Durchmessern, klassiert. Diese vorzugsweise als Siebmaschinen ausgeführten Klassiereinrichtungen sind mit mehreren übereinanderliegenden Siebdecks ausgerüstet, die jeweils mit Siebreinigungsvorrichtungen bestückt sind. Die Maschinen sind staubdicht gekapselt und mit der zentralen Staubabsaugeinrichtung 74 verbunden.

Vor und nach den Klassiereinrichtungen sind in den Fördereinrichtungen für die einzelnen Produktströme Schaugläser, Füllstutzen und Durchsatzmeßeinrichtungen installiert. Dadurch ist es jederzeit problemlos möglich, den Produktfluß zu kontrollieren, Proben zu nehmen und die Arbeitsqualität zu überwachen. Die einzelnen Granulatkornfraktionen werden dem Klassier- und Reinigungssystem 72 zugeführt.

Über mehrere Reinigungsstufen werden dabei als Schwergut mineralische und metallische, nicht magnetische Verunreinigungen abgeschieden. In weiteren Reinigungsstufen werden als Leichtgut letzte Textilreste abgetrennt.

Die Granulatkornfraktionen werden mit Hilfe von dosierbaren Zuführeinrichtungen 75, 75a, 75b zu speziell für die Reinigung von Gummigranulaten konstruierten und ausgelegten Schwerteilabscheider 76, 76a, 76b vorzugsweise Windsichteranlagen geführt.

Das Granulat schwebt in den Schwerteilabscheidern 76, 76a, 76b mit dem exakt eingestellten Luftstrom nach oben, während sich mineralische und metallische Bestandteile, die schwerer sind, in dem unteren Teil der Reinigungseinrichtung sammeln, ausgetragen werden und über Förderer zu einer Sammelstelle oder Konfektionierung 24 gelangen. Das Granulat wird mit dem Luftstrom in die Abscheider 77, 77a, 78b transportiert, über die Austrageinrichtungen 78, 78a und 78b ausgetragen und an die nachfolgenden Zuführeinrichtungen 80, 80a, 80b der nächsten Reinigungsstufe übergeben.

Der Luftstrom wird durch die Gebläse' 79, 79a und 79b erzeugt und im Kreislauf geführt, so daß keine zusätzliche Entstaubungsstation mit Filtern erforderlich ist.

Die Zuführeinrichtungen 80, 80a, 80b der nächsten Reinigungsstufe übergeben das Granulat in speziell ausgeführte Leichtteilabscheider 81, 81a, 81b. Leichte Bestandteile wie Textilflusen werden durch den genau eingestellten Luftstrom abgetrennt, zu den Abscheidern 82, 82a und 82b transportiert und über die Austragvorrichtungen 83, 83a und 83b ausgetragen. Die abgeschiedenen Textilbestandteile werden der Textilfördereinrichtung 69 der Konfektionierung 24 zugeführt. Zur Abtrennung letzter textiler Verunreinigungen sind optoelektronische Kontroll- und Nachsortiereinrichtungen 85, 85a, 85b vorgesehen.

Der Luftstrom der Leichtteilabscheider 81, 81a, 81b wird durch die Gebläse 84, 84a und 84b erzeugt und im Kreislauf geführt, so daß keine zusätzliche Entstaubungsstation mit Filtern erforderlich ist.

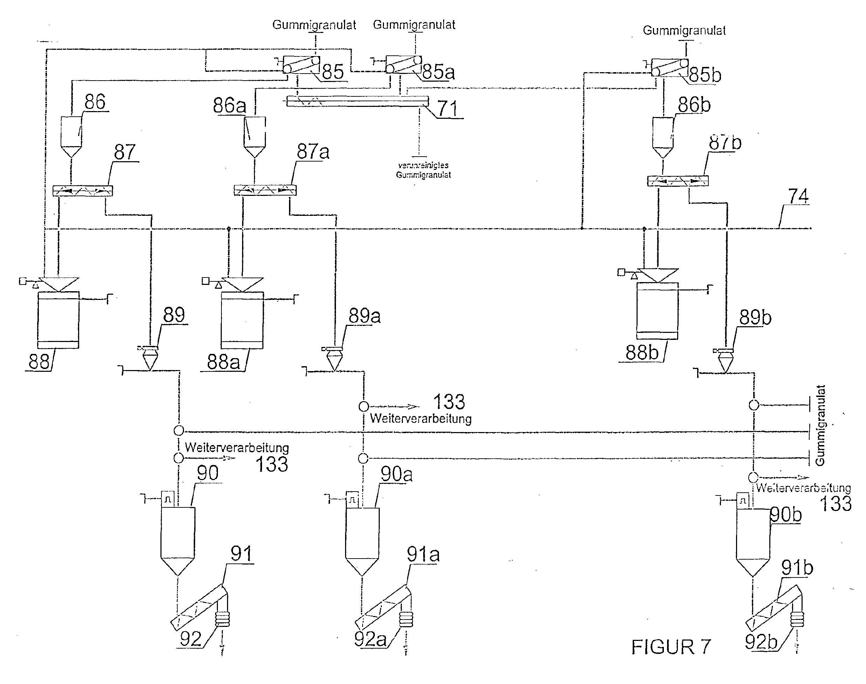

Dem Granulatklassier- und Reinigungssystem sind, wie in Figur 7 dargestellt, Kontroll- und Nachtrenneinrichtungen zum Abtrennen noch enthaltener textilbehafteter Gummipartikel nachgeordnet. Die von den Leichtteilabscheidern 81, 81a und 81b ausgetragenen Granulatkornfraktionen werden separat den Kontroll- und Nachsortiereinrichtungen 85, 85a und 85b zugeführt. Ab- und fehlgetrennte Partikel werden in den Aufbereitungsprozeß zurückgeführt.

Die so erzeugten Granulatfraktionen können jetzt wahlweise entweder der Mehlerzeugung 93 oder als Finalprodukt der Verpackung beziehungsweise der LKW-Verladung zugeführt werden.

Dazu werden die Granulatfraktionen von den Kontrollund Nachtrenneinrichtungen 85, 85a und 85b in Zwischenspeichern 86, 86a, 86b transportiert, aus denen sie mittels reversierbarer Fördereinrichtungen 87, 87a, 87b weiteren Fördereinrichtungen, vorzugsweise pneumatischen Fördereinrichtungen 89, 89a, 89b zugeführt werden, die das Granulat entweder zur Mehlerzeugung 93 oder in die Silos 90, 90a, 90b transportieren.

Diese sind vorzugsweise außerhalb des Gebäudes angeordnet. Aus den Silos 90, 90a, 90b wird das Granulat über Fördereinrichtungen 91, 91a, 91b und die Verladeeinrichtungen 92, 92a, 92b in LKW, vorzugsweise Silofahrzeuge gefüllt.

Durch Änderung der Förderrichtung der reversierbaren Fördereinrichtungen 87, 87a, 87b können die Granulatfraktionen den Verpackungseinrichtungen 88, 88a, 88b, vorzugsweise Big-Bag-Stationen, zugeführt werden, wo sie als hochreines Granulat von gleichmäßiger Korngröße abgefüllt werden. Die Korngröße und Anzahl der zu verpackenden Kornfraktionen sind durch Änderung der Trennschnitte in den Klassiereinrichtungen 73, 73a und 73b wählbar und können somit den Markterfordernissen angepaßt werden.

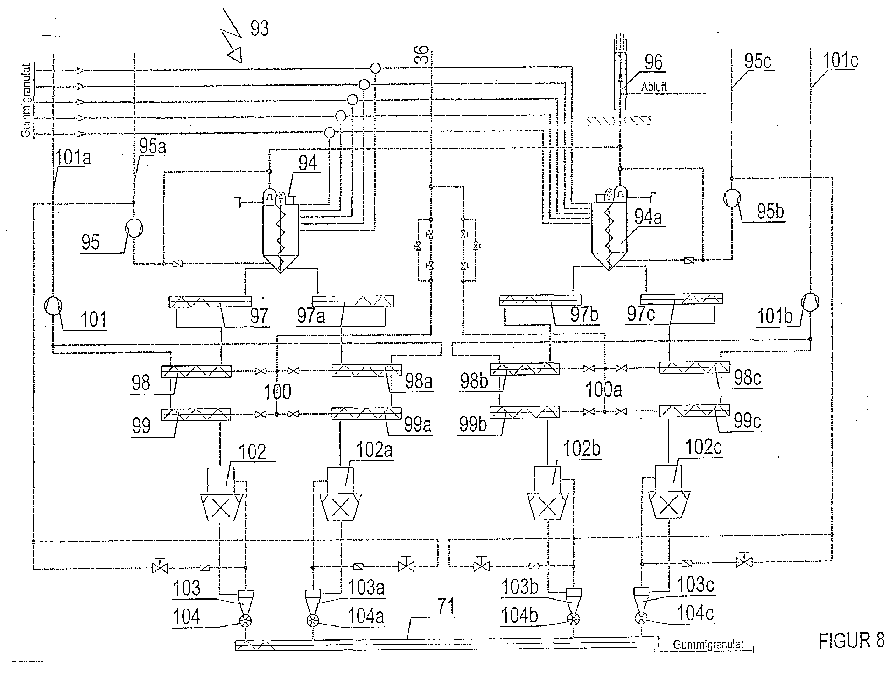

Für die Mehlerzeugung werden die Granulatfraktionen gemäß Figur 8 über die Fördereinrichtungen 89, 89a, 89b in Vorkühleinrichtungen 94, 94a transportiert. Entsprechend den Anforderungen können eine oder mehrere parallel angeordnete Vorkühleinrichtungen in der Anlage vorhanden sein.

In diesen Vorkühleinrichtungen 94, 94a wird das kalte Abgas aus den Vorkühltunnelsystemen 31 und 31a für die Kühlung des Granulates genutzt. Die Kaltgasventilatoren 95, 95a dienen dabei der Zuführung kalten Kühlmittelgases von den Tiefkühlanlagen 31 bzw. 31a. Eingebaute Bewegungselemente in den Vorkühleinrichtungen 94, 94a verhindern dabei ein mögliches Agglomerieren der Gummipartikel. Nach dem Durchströmen der Vorkühler 94, 94a wird das verbrauchte Kühlmittelgas gemeinsam mit den Abgasen der Erwärmungs- und Trocknungseinrichtungen 49, 106 mittels eines Gasmischers 96 in die Atmosphäre abgegeben Das vorgekühlte Granulat wird über Dosiereinrichtungen 97, 97a, 97b, 97c einer vorzugsweise Kühlschnecken oder Trommelkühler aufweisenden Granulatkühlung 93 zugeführt, die, wie die Figur 8 zeigt, jeweils aus einem Hauptkühlsystem 98, 98a, 98b und 98c und einem Ausgleichssystem 99, 99a, 99b und 99c besteht und mit der Kühlmittelversorgung 34 verbunden ist. Die Granulatkülung 93 kann den Temperaturerfordernissen entsprechend gesteuert werden. Die Kühlmittelversorgung 34 ist über Spezialrohrleitungen 36 und Stickstoffzuführungen 100 bzw. 100a mit den Hauptkühlsystemen 98 bis 98c und den Ausgleichsystemen 99 bis 99c verbunden.

In die Hauptkühl- und Ausgleichsssysteme 98 bis 98c; 99 bis 99c wird flüssiges Kühlmittel, vorzugsweise Stickstoff, auf das sich bewegende Granulat aufgesprüht, so daß eine intensive Kühlwirkung des verdampfenden Kühlmittels erreicht wird. Das Granulat wird dadurch auf die erforderliche tiefe Temperatur von etwa -140°C oder tiefer heruntergekühlt.

Die Hauptkühl- und Ausgleichssysteme 98 bis 98c; 99 bis 99c verfügen über eine unabhängige Regelung der Temperatur, der Fördergeschwindigkeit und der Stickstoffzufuhr 100/100a. Um einen möglichst großen Wärmeaustausch mit dem Kühlmittel zu erreichen, werden die Kühlmittelabgase im Gegenstrom durch das Hauptkühlsystem 98 bis 98c und Ausgleichsystem 99 bis 99c über das Granulat geleitet.

Die Kühlmittelabgase des Hauptkühlsystems 98 bis 98c werden über Kaltgasrückführungen, bestehend aus Kaltgasventilatoren 101, 101b und Kaltgasrohrleitungen 101a, 101c zur weiteren Ausnutzung des Energiepotentials zu den Kaltgaszuführungen 39 bzw. 39a der Vorkühltunnelsysteme 31 und 31a geleitet. Entsprechend den Anforderungen können ein oder mehrere parallel angeordnete Granulatkühler in der Anlage vorhanden sein.

Von den Ausgleichssystemen 99, 99a, 99b und 99c gelangt das tiefkalte, versprödete Gummigranulat in die Feinzerkleinerer 102, 102a, 102b und 102c. In den Feinzerkleinerern 102, 102a, 102b und 102c wird das Gummigranulat mechanisch zerkleinert.

Die vorzugsweise mit einer hohen Drehzahl arbeitenden Feinzerkleinerer 102, 102a, 102b und 102c erzeugen während des Zerkleinerungsprozesses eine starke Gasströmung, die sich nachteilig auf den Energieverbrauch auswirkt. Die Anlage besitzt deshalb für jeden der Feinzerkleinerer ein Kaltgaskreislaufsystem. Das in großer Menge austretende Kaltgas transportiert das erzeugte Mehl in geeignete Abscheider 103, 103a, 103b und 103c.

Das gereinigte Kaltgas wird danach erneut den Feinzerkleinerern 102, 102a, 102b und 102c zugeführt. Überschüssiges Kaltgas wird an die vorhandenen Vorkühleinrichtungen 94, 94a abgegeben. Die Kaltgasrückführungen bestehen aus speziellen Rohrleitungen mit Armaturen und den Kaltgasventilatoren 101, 101b.

Bei Feinzerkleinerern mit geringer Drehzahl, bei denen keine starke Luftströmung entsteht, kann auf ein Kaltgaskreislaufsystem verzichtet werden.

Aufbau, Bauart, Betriebsparameter und Materialeigenschaften der Feinzerkleinerer sind für die Guteigenschaften und die Prozeßgrößen des Altreifenrecyclings entwickelt und genauestens abgestimmt worden. Wichtigste Kenngröße ist die Feinheit und die Korngrößenverteilung des Mahlproduktes. Die zum Einsatz kommenden Feinzerkleinerer 102 bis 102c sind auf die Erzeugung möglichst hoher Anteile an Feinprodukt (<100 µm) ausgelegt.

Die Struktur des Einzelkorns ist ebenfalls charakteristisch für die kryogene Feinzerkleinerung. Für die nachfolgenden Verfahrensschritte der Klassierung und Reinigung, besonders aber für die meisten Möglichkeiten der Weiterverarbeitung der Gummimehle ist die stark kubische Kornform mit relativ glatten Bruchflächen und somit kleiner Oberfläche als günstig anzusehen. Entsprechend den Anforderungen können ein oder mehrere parallel angeordnete Feinzerkleinerer 102 in der Anlage vorhanden sein.

Die Ausführung in mehreren parallelen Aggregaten erhöht die Verfügbarkeit der Gesamtanlage bei eventuellem Ausfall eines Feinzerkleinerers.

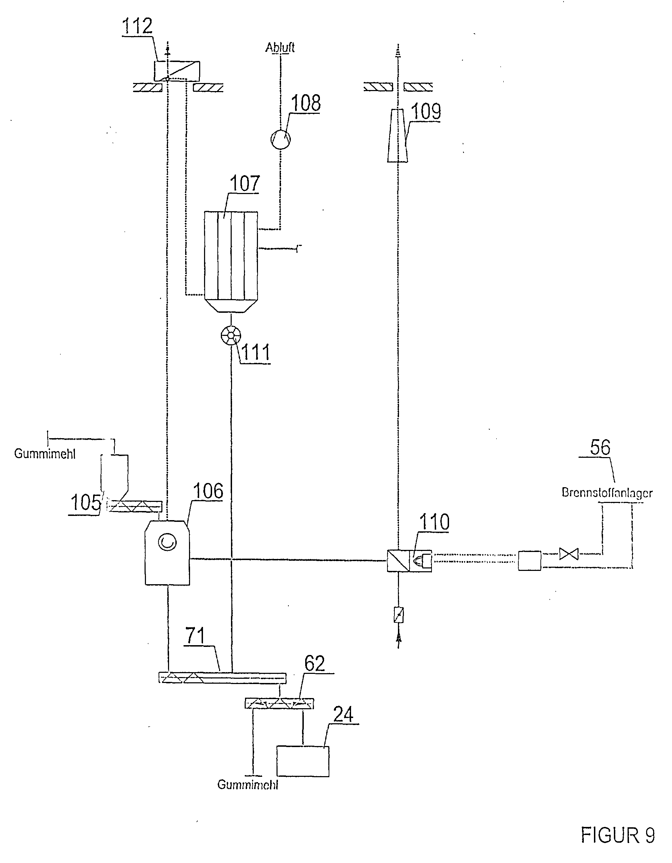

Das erzeugte kalte Mehl wird aus den Abscheidern 103 bis 103c durch die Austragvorrichtungen 104 bis 104c ausgetragen und über ein Sammel- und Fördersystem 71 der Zuführeinrichtung 105 und anschließend der Erwärmungs- und Trocknungseinrichtung 106 zugeführt, wie sie in Figur 9 dargestellt ist.

Wegen der sehr tiefen Temperaturen nimmt das erzeugte Gummimehl bei Kontakt mit der Umgebungsluft sofort Feuchtigkeit auf, die nachfolgende Klassier- und Trennprozesse erschwert. Deshalb ist in die Anlage eine Erwärmungs- und Trocknungsanlage 106 für Gummimehl gemäß Figur 9 integriert. Vorzugsweise wird dafür ebenfakls ein Trommeltrockner verwendet, da diese Ausführung einen kontinuierlichen Prozeß mit hohem Durchsatz ermöglicht. Spezielle Einbauten für Mehl erhöhen die Wirksamkeit des Wärmeaustausches zwischen der Trocknungsluft und dem Gut in Kombination mit der Drehbewegung der Trommel.

Die Lufterwärmung erfolgt indirekt mittels eines modulierend arbeitenden Erhitzers 110, um eine schonende und sichere Erwärmung des Gutes unter Berücksichtigung der Maßnahmen des Brand- und Explosionsschutzes im Prozeß zu realisieren. Die Brennerabgase werden über eine Abgasführung 109 an die Umgebungsluft abgegeben.

Die Abluft aus dem Erwärmungsprozeß wird über ein Rohrleitungssystem und geeignete Sicherheitseinrichtungen 112 in einen Staubabscheider 107 geleitet und gereinigt.

Dem Staubabscheider kann ein Gebläse 108 zugeordnet sein, um einen optimalen Luftstrom zu gewährleisten. Der Staubabscheider 107 besitzt alle erforderlichen Sicherheitseinrichtungen und ist so ausgeführt, daß er den erhöhten Anforderungen des Brand- und Explosionsschutzes entspricht.

Der abgeschiedene Staub wird über eine Austragseinrichtung 111, Sammel- und Fördereinrichtungen 71 sowie Förderer 62 in eine geeignete Konfektionierung 24 ausgetragen oder in den Hauptproduktstrom zurückgeführt.

Nach anderen Prinzipien arbeitende Erwärmungs- und Trocknungseinrichtungen, wie z. B. mit Erwärmung durch direkten Kontakt zwischen zu trocknendem Gut und beheizten Oberflächen sind ebenfalls denkbar. Der Erwärmungs- und Trocknungseinrichtung ist eine Brennstoffversorgungsanlage 56, vorzugsweise mit Öl oder Gas, zugeordnet.

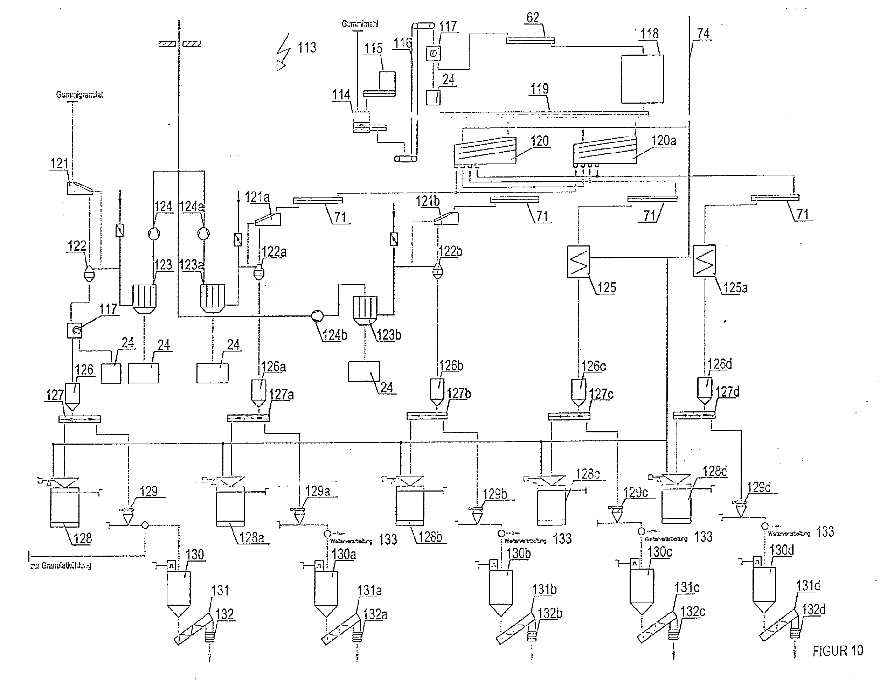

Nach dem Verlassen der Erwärmungs- und Trocknungseinrichtung wird das Gummimehl über ein Förderer 62 der Mehlklassierung und Reinigung 113, wie Figur 10 zeigt, zugeführt.

Die erzeugten Mehle sind sehr fein und neigen zu Agglomeration, wodurch die Klassierung der Feinanteile erschwert wird. Dieser Agglomerationsprozeß kann durch die dosierte Zumischung eines Dispergiermittels verhindert werden. Der Hauptproduktstrom wird deshalb vor der Klassierung in einen Mischer 114 gefördert. Durch eine Dosiereinrichtung 115 kann das Dispergiermittel in entsprechender Menge dem Gummimehl zudosiert und im Mischer 114 vermischt werden.

Das aus dem Mischer 114 austretende Gut wird über ein Fördersystem 116 zu einem Abscheider 117 transportiert, wo Hochleistungsmagnete mit hoher Tiefenwirkung bei der Mehlherstellung noch freigelegte Stahlreste und feinsten Stahlabrieb aus dem Gummimehl entfernen. Das so aufbereitete Gummimehl wird über Förderer 62 einem nachgeordneten Zwischenspeicher 118 zugeführt.

Das Gummimehl wird mittels Förder- und Dosiersystem 119 den Mehlklassiereinrichtungen 120, 120a, vorzugsweise Mehrdeck-Siebmaschinen, zugeführt. Entsprechend den Anforderungen können eine oder mehrere parallel angeordnete Mehlklassiereinrichtungen 120 in der Anlage vorhanden sein.

Die Mehlklassiereinrichtungen, vorzugsweise Mehrdeck-Siebmaschinen 120, 120a zeichnen sich durch eine Vielzahl möglicher Trennschnitte innerhalb einer Maschine, eine hohe Trennschärfe im Fein- und Feinstkornbereich, eine kompakte Bauweise und eine wartungsfreundliche Konstruktion aus.

Siebreinigungssysteme halten die Siebbespannungen zuverlässig frei. Die Maschinen sind konstruktiv so ausgeführt, daß nur minimale dynamische Kräfte auf den Aufstellungsort übertragen werden. Die Größe und Anzahl der Kornfraktionen des Gummimehles sind durch Änderung der Trennschnitte in den Mehlklassiereinrichtungen 120 und 120a frei wählbar und können somit den Markterfordernissen angepaßt werden.

Die einzelnen Kornfraktionen werden über Sammel- und Fördereinrchtungen 71 separat den Reinigungsprozessen zugeführt. Die Reinigungsprozesse sind, bedingt durch die Feinheit des Mehles, genau auf die Korngröße der jeweiligen Kornfraktion abzustimmen. Gröbere Kornfraktionen gelangen von den Sammel- und Fördereinrichtungen 71 auf weitere Textiltrenneinrichtungen 121a und 121b, denen Leichtteilabscheider 122a und 122b nachgeordnet sind.

Die abgeschiedenen Textilflusen werden pneumatisch in die Staubabscheider 123 und 123a, 123b transportiert und einer Konfektionierung 24 zugeführt. Die erforderliche luftströmung wird durch ein Gebläse 124, 124a, 124b erzeugt. Von den Leichtteilabscheidern 122a und 122b wird das gröbere Gummimehl kornfraktionsweise in Zwischenspeicher 126, 126a und 126b transportiert. Von den Zwischenspeichern 126, 126a und 126b werden die Mehlfraktionen über reversierbare Fördereinrichtungen 127, 127a und 127b, weiteren pneumatischen Fördereinrichtungen 129, 129a und 129b zugeführt, die das Mehl entweder in die Silos 130a und 130b oder in Weiterverarbeitungsanlagen 133 transportieren.

Durch die Änderung der Förderrichtung der reversierbaren Förderschnecken 127a und 127b können die Mehlfraktionen den Verpackungseinrichtungen 128a und 128b, vorzugsweise Big-Bag-Stationen, zugeführt werden, wo sie als hochreines Gummimehl von gleichmäßiger Korngröße abgefüllt werden.

Feinstmehle gelangen von den Sammel- und Fördereinrichtungen 71 in eine Mehlreinigung 125 und 125a In dieser Mehlreinigung 125, 125a werden noch eventuell vorhandene Textilbestandteile abgeschieden und von der Staubabsaugeinrichtung 74 abgeführt.

Von der Mehlreinigung 125 und 125a wird das feine Gummimehl ebenfalls kornfraktionsweise in Zwischenspeicher 126c und 126d transportiert. Von den Zwischenspeichern 126c und 126d werden die Mehlfraktionen über reversierbare Fördereinrichtungen 127c und 127d, weiteren Fördereinrichtungen, vorzugsweise pneumatischen Fördereinrichtungen 129, 129a zugeführt, die das Mehl entweder in die Silos 130c und 130d oder in Weiterverarbeitungsanlagen 133 transportieren.

Die Silos sind vorzugsweise außerhalb des Gebäudes angeordnet. Aus den Silos 130a bis 130d wird das Mahlgut über Fördereinrichtungen 131 bis 131d an die Verladeeinrichtungen 132 bis 132d geführt, mit denen beispielsweise Tanklastwagen befüllt werden können.

Durch die Änderung der Förderrichtung der reversierbaren Förderschnecken 127c und 127d können die Mehlfraktionen ebenfalls den Verpackungseinrichtungen 128c und 128d, vorzugsweise Big-Bag-Stationen, zugeführt werden. Zusätzlich zum Hauptproduktstrom wird im Bereich der Mehlklassierung und Reinigung das bei der Vorklassieranlage 60 abgeschiedene Feingut in einem Nebenstrom gereinigt. Das Feingut gelangt von den Trenneinrichtungen 66, 66a und 66b und die Sammel und Fördereinrichtung auf eine weitere Textiltrenneinrichtung 121, der ein Leichtteilabscheider 122 nachgeordnet ist.

Die abgeschiedenen Textilflusen werden pneumatisch in den Staubabscheider 123 transportiert und einer Konfektionierung 24 zugeführt. Die erforderliche Luftströmung wird durch ein Gebläse 124 erzeugt. Vom Leichtteilabscheider 122 wird das Feingut an einen Abscheider 117 für die Stahlabtrennung übergeben. Das so aufbereitete Feingut wird über den Zwischenspeicher 126 der reversierbaren Fördereinrichtung 127 und wahlweise der Mehlerzeugung 93 zugeführt. Es kann auch als Finalprodukt einer Verpackungseinrichtung 128, vorzugsweise einer Big-Bag-Station, oder mit einer pneumatischen Fördereinrichtung 129 oder 131 einer Siloanlage 130 oder einer Verladeeinrichtung 132 zugeführt werden.

Das so klassierte und gereinigte Gummimehl ist für die Weiterverarbeitung zu Finalprodukten geeignet und ist ein Surrogat für die verschiedensten Gummirohstoffe.

### Bezugszeichen

- 10: Reifenzerkleinerungsanlage
- 11: Zuführung
- 11a: Dosierung
- 12: Zuführeinrichtung
- 13: Zerkleinerer
- 14: Abscheider
- 15: Förderer
- 16: Verteiler
- 17, 17a: Zerkleinerer
- 18, 18a: Klassiereinrichtung
- 19, 19a: Abscheider
- 20, 20a: Grobteilrückführung
- 21: Zusammenführeinrichtung
- 22: Auflockerungseinrichtung
- 23: Metall/Textilabscheider
- 24: Konfektionierung
- 25: Fördersystem
- 26: Verteileinrichtung
- 27, 27a: Dosiereinrichtung
- 28, 28a: Förderer
- 29, 29a: Zuführsystem
- 30: Tiefkühlanlage
- 31, 31a: Vorkühltunnelsystem
- 32, 32a: Hauptkühltunnelsystem
- 33, 33a: Ausgleichssystem
- 34: Kühlmittelversorgung
- 35: Kühlmitteltank
- 36: Kühlmittelzuleitung
- 37, 37a: Spezialförderer
- 38, 38a: Absperreinrichtung
- 39, 39a: Kaltgaszuführung
- 40: Granulatherstellung
- 41, 41a: Zuführeinrichtung
- 42, 42a: Zerkleinerer
- 43, 43a: Abscheider
- 44, 44a: Zerkleinerer
- 45, 45a: Kryogene Trenneinrichtung
- 46: Fördersystem
- 47: Fördersystem
- 48: Zuführeinrichtung
- 49: Erwärmungs-und Trocknungseinrichtung
- 50: Staubbscheider
- 51: Gebläse
- 52: Abgasführung
- 53: Erhitzer
- 54: Austrageinrichtung
- 55: Sicherheitseinrichtung
- 56: Brennstoffversorgungsanlage
- 57: Fördereinrichtung
- 58: Zuführeinrichtung
- 59: Abscheider
- 60: Vorklassieranlage
- 61: Vorklassiereinrichtung
- 62: Förderer
- 63: Zwischenspeicher
- 64, 64a, 64b: Dosiereinrichtung
- 65, 65a, 65b: Nachaufbereitungseinrichtung
- 66, 66a, 66b: Trenneinrichtung
- 67: Zwischenspeicher
- 68, 68a, 68b: Zuführsystem
- 69: Textilfördereinrichtung
- 70: Textilkonfektionierung
- 71: Sammel- und Fördereinrichtung
- 72: Klassier- und Reinigungssystem
- 73, 73a, 73b: Klassiereinrichtung
- 74: Staubabsaugungseinrichtung
- 75, 75a, 75b: Zuführeinrichtung
- 76, 76a, 76b: Schwerteilabscheider
- 77, 77a, 77b: Abscheider
- 78, 78a, 78b: Austragvorrichtung
- 79, 79a, 79b: Gebläse
- 80, 80a,: Zuführeinrichtung 80b
- 81, 81a, 81b: Leichtteilabscheider
- 82, 82a, 82b: Abscheider
- 83, 83a, 83b: Austragvorrichtung
- 84, 84a, 84b: Gebläse
- 85, 85a, 85b: Kontroll- und Nachsortiereinrichtung
- 86, 86a, 86b: Zwischenspeicher
- 87, 87a, 87b: Reversierbare Fördereinrichtung
- 88, 88a, 88b: Verpackungseinrichtung
- 89, 89a, 89b: Pneumatische Fördereinrichtung
- 90, 90a, 90b: Silo
- 91, 91a, 91b: Fördereinrichtung
- 92, 92a, 92b: Verladeeinrichtung
- 93: Granulatkühlung
- 94, 94a: Vorkühleinrichtung
- 95, 95b: Kaltgasventilator
- 95a, 95c: Kaltgasrohrleitung
- 96: Gasmischer
- 97, 97a, 97b, 97c: Dosiereinrichtung
- 98, 98a, 98b, 98c: Hauptkühltunnelsystem
- 99, 99a, 99b, 99c: Ausgleichsystem
- 100, 100a: Stickstoffzuführung
- 101, 101b: Kaltgasventilator
- 101a, 101c: Kaltgasrohrleitung
- 102, 102a, 102b, 102c: Feinzerkleinerer
- 103, 103a, 103b, 103c: Abscheider
- 104, 104a, 104b, 104c: Austragvorrichtung
- 105: Zuführeinrichtung
- 106: Erwärmungs-und Trocknungseinrichtung
- 107: Staubabscheider
- 108: Gebläse
- 109: Abgasführung
- 110: Erhitzer
- 111: Austrageinrichtung
- 112: Sicherheitseinrichtung
- 113: Mehlklassier- und Reinigungsanlage
- 114: Mischer
- 115: Dosiereinrichtung
- 116: Fördersystem
- 117: Abscheider
- 118: Zwischenspeicher
- 119: Förder- und Dosiersystem
- 120, 120a: Mehlklassiereinrichtung
- 121, 121a, 121b: Textiltrenneinrichtung
- 122, 122a, 122b: Leichtteilabscheider
- 123, 123a, 123b: Staubabscheider
- 124, 124a, 124b: Gebläse
- 125, 125a: Mehlreinigung
- 126, 126a, 126b, 126c, 126d: Zwischenspeicher
- 127, 127a, 127b, 127c, 127d: Reversierbare Fördereinrichtung
- 128, 128a, 128b, 128c, 128d: Verpackungseinrichtung
- 129, 129a, 129b, 129c, 129d: Pneumatische Fördereinrichtung
- 130, 130a, 130b, 130c, 130d: Silo
- 131, 131a, 131b, 131c, 131d: Fördereinrichtung
- 132, 132a, 132b, 132c, 132d: Verladeeinrichtung
- 133: Weiterverarbeitung

## Patentansprüche

1. Anlage zur Aufbereitung von Altgummi und Altgummiprodukten durch mehrfache kryogene Zerkleinerung, mit Tiefkühleinrichtungen zur Unterkühlung des zu zerkleinernden Gutes, mit Fremdstoffabscheidern und Klassiereinrichtungen, **gekennzeichnet durch**
- eine mehrstufige Vorzerkleinerung (12, 13, 17, 17a),
- eine nachgeordnete, mehrstufige Tiefkühlanlage (30), bestehend aus
a) einem Vorkühltunnelsystem (31, 31a), in das kaltes Kühlmittelabgas einleitbar ist,
b) einem Hauptkühltunnelsystem (32, 32a), in dem ein flüssiges Tiefkühlmittel auf das vorzerkleinerte Gut aufsprühbar ist und
c) einem Ausgleichssystem (33, 33a),
- ferner **durch** der Tiefkühlanlage (30) nachgeordnete mehrstufige Zerkleinerer (42, 44; 42a, 44a) für tiefkühles Mahlgut,
- **durch** erste Klassier- und Trenneinrichtungen für das Aufbereiten des Mahlgutes,
- eine weitere, nachfolgende Tiefkühleinrichtung, bestehend aus
a) einem Vorkühltunnelsystem (94, 94a), in das kaltes Kühlmittelabgas einleitbar ist,
b) einem Hauptkühltunnelsystem (98, 98a, 98b, 98c), in dem ein flüssiges Tiefkühlmittel auf das vorzerkleinerte Gut aufsprühbar ist, sowie
c) ein Ausgleichssystem (99, 99a, 99b, 99c),
- **durch** dem Tiefkühlsystem nachgeordnete Feinzerkleinerer (102 - 102c) für tiefkaltes Gut, und -
- **durch** sich anschließende weitere Klassier- und Trenneinrichtungen für die Aufbereitung mehlförmigen Mahlgutes.

2. Vorrichtung zur Aufbereitung von Altgummi und Altgummiprodukten durch kryogene Zerkleinerung, mit Kühltunneln zur Unterkühlung des zu zerkleinernden Mahlgutes, Fremdstoffabscheidern und Mahleinrichtungen für tiefgekühltes Mahlgut, **gekennzeichnet durch** eine mehrstufige Vorzerkleinerung in der Vorzerkleinerer (17, 17a) vorgesehen sind, **durch** eine in mehrere Kühlzonen unterteilte Tiefkühlanlage (30) **durch** die das vorzerkleinerte Mahlgut leitbar und in der ein flüssiges Tiefkühlmittel auf das Mahlgut aufsprühbar ist, der Tiefkühlanlage (30) ein Ausgleichsystem (99 - 99c) nachgeordnet ist und das tiefgekühlte Mahlgut in sich anschließenden mehrstufigen Feinzerkleinerern (102, 102a, 102b, 102c) stufenweise fein zerkleinerbar ist.

3. Anlage nach Anspruch 1 oder 2, **dadurch gekennzeichnet, daß** aus dem Vorkühltunnelsystem (31, 31a) kaltes Kühlmittelgas abführbar und Kühlmittelabgas anderer Tiefkühlprozesse zuleitbar ist.

4. Anlage nach den Ansprüchen 1 oder 2, **dadurch gekennzeichnet, daß** den Feinzerkleinerern (102, 102a, 102b 102c) Metallabscheider (43, 43a) nachgeordnet sind und den Metallabscheidern (43, 43a ) Gummiteile ablösende kryogene Trenneinrichtungen (45, 45a) und weitere Zerkleinerer (44, 44a) zugeordnet sind.

5. Anlage nach den Ansprüche 1 oder 2, **dadurch gekennzeichnet, daß** den Zerkleinerern (44, 44a) eine Erwärmungs- und Trocknungseinrichtung (49) nachgeordnet ist und der Erwärmungs- und Trocknungseinrichtung (49) eine Vorklassieranlage (60) und eine oder mehrere parallele Nachaufbereitungseinrichtungen (65, 65a, 65b) nachgeordnet sind.

6. Anlage nach Anspruch 5, **dadurch gekennzeichnet, daß** das in den Nachaufbereitungseinrichtungen (65, 65a, 65b) erzeugte Gut mit dem in der Vorklassieranlage (60) abgetrennten Granulat zusammengeführt und Trenneinrichtungen (66, 66a, 66b) zuführbar ist, wobei den Trenneinrichtungen (66, 66a, 66b) eine variable Anzahl mehrstufiger Klassiereinrichtungen (73, 73a, 73b) und den Klassiereinrichtungen (73, 73a, 73b) für jede Korngrößenklasse Schwerteilabscheider (76, 76a, 76b) und Leichtteilabscheider (81, 81a, 81b) nachgeordnet sind.

7. Anlage nach den Ansprüchen 1 bis 6, **dadurch gekennzeichnet, daß** die Klassiereinrichtungen (73, 73a, 73b) mit optoelektronischen Kontroll- und Nachsortiereinrichtungen (85, 85a, 85b) versehen sind.

8. Anlage nach den Ansprüche 1 oder 2, **dadurch gekennzeichnet, daß** eine weitere mehrstufige Tiefkühlung, bestehend aus Vorkühleinrichtung (94, 94a), Hauptkühltunnelsystem (98, 98a) und Ausgleichsystem (99, 99a, 99b, 99c) vorgesehen ist, in der das erzeugte Granulat erneut auf Versprödungstemperatur bringbar ist.

9. Anlage nach Anspruch 8, **dadurch gekennzeichnet, daß** Kühlmittelabgas mittels Kaltgasventilatoren (95, 95a) und Kaltgasrohrleitungen (95b, 95c) aus der Tiefkühlanlage (30) für vorzerkleinertes Mahlgut in die Vorkühleinrichtung für Granulat (94, 94a) einleitbar ist.

10. Anlage nach den Ansprüchen 1 bis 9, **dadurch gekennzeichnet, daß** dem Vorkühltunnelsystem (31, 31a), der Vorkühleinrichtung (94, 94a) und den Erwärmungs- und Trocknungseinrichtungen (49, 106) Gasmischer (96) für die Zusammenführung der Kühlmittel- und Trocknungsabgase zugeordnet sind.

11. Anlage nach den Ansprüchen 1 bis 10, **dadurch gekennzeichnet, daß** der Granulatkühlung (93) Feinzerkleinerer (102, 102a, 102b, 102c) mit Abscheidern (103, 103a, 103b, 103c) und eine Kreislaufführung des Kühlmittelgases zugeordnet sind.

12. Anlage nach Anspruch 11, **dadurch gekennzeichnet, daß** die Feinzerkleinerer (102, 102a, 102b, 102c) tiefkalt betrieben sind und der Granulatkiihlung (93) und den Feinzerkleinerern (102, 102a, 102b, 102c) zu den Vorkühltunnelsystemen (31, 31a) führende Kaltgasventilatoren (101, 101b) und Kaltgastransportmittel (101a, 101c) für Kühlmittelabgas zugeordnet sind.

13. Anlage nach Anspruch 12, **dadurch gekennzeichnet, daß** den Feinzerkleinerern (102, 102a, 102b, 102c) jeweils eine Erwärmungs- und Trocknungseinrichtung (106), ein Mischer (114) und eine Dosiereinrichtung (115) einer Dispergiermittelzugabe nachgeordnet sind.

14. Anlage nach Anspruch 13, **dadurch gekennzeichnet, daß** dem Mischer (114) eine Mehlklassierung (120, 120a), eine nach Mehlkorngrößen unterteilte Leichtgut-Nachtrenneinrichtung (122, 122a, 122b, 122c) und eine Mehlreinigung (125, 125a) nachgeordnet sind.
